(19) **Europäisches Patentamt**

**European Patent Office**

**Office européen des brevets**

(11) Veröffentlichungsnummer: **0 440 115 B1**

(12) **EUROPÄISCHE PATENTSCHRIFT**

(45) Veröffentlichungstag der Patentschrift: **21.09.94**

(51) Int. Cl.⁵: **B32B 15/01**

(21) Anmeldenummer: **91101007.2**

(22) Anmeldetag: **26.01.91**

(54) **Wandstruktur mit Kernschicht auf Eisen/Nickellegierungsbasis mit oxidbildender Oberflächenschicht.**

(30) Priorität: **01.02.90 DE 4002839**

(43) Veröffentlichungstag der Anmeldung:
**07.08.91 Patentblatt 91/32**

(45) Bekanntmachung des Hinweises auf die Patenterteilung:
**21.09.94 Patentblatt 94/38**

(84) Benannte Vertragsstaaten:
**DE**

(56) Entgegenhaltungen:
**FR-A- 2 067 085          FR-A- 2 123 014**
**FR-A- 2 149 294          FR-A- 2 347 153**
**FR-A- 2 511 698          FR-A- 2 566 803**
**GB-A- 2 066 696**

(73) Patentinhaber: **FORSCHUNGSZENTRUM JÜLICH GMBH**
**Wilhelm-Johnen-Strasse**
**D-52425 Jülich (DE)**

(72) Erfinder: **Ennis, Philip James**
**Josefstrasse 11**
**W-5170 Jülich (DE)**
Erfinder: **Bongartz, Karl, Dr.**
**Zum Jagdfeld 6**
**W-5170 Jülich (DE)**
Erfinder: **Nickel, Hubertus, Prof.**
**Am Waldeck 5**
**W-5170 Jülich (DE)**
Erfinder: **Schuster, Hans, Dr.**
**Colynshofstrasse 7**
**W-5100 Aachen (DE)**
Erfinder: **Ouadakkers, Willem Josef**
**Stephanusstrasse 6**
**W-5170 Jülich (DE)**

Rank Xerox (UK) Business Services
(3.10/3.09/3.3.3)

**Beschreibung**

Die Erfindung bezieht sich auf eine für Hochtemperaturanwendungen geeignete mehrschichtige Wandstruktur aus einer tragenden Kernschicht aus einer Legierung auf Eisen- Nickel-Chrom-Basis mit zumindest einseitiger korrosionsfester dünner Oberflächenschicht aus einer dichte Oxidfilme bildenden Legierung auf Nickel-Chrom-Basis.

Als Materialien für die Wände von Rohren, Behältern u.-dgl. für Hochtemperaturanwendungen sind Legierungen auf Eisen- Nickel-Chrom-Basis bekannt (z.B. aus FR-A-2511198), insbesondere Legierungen, deren Festigkeit bei hohen Temperaturen eine komplexe Zusammensetzung erfordert, die insbesondere mischkristallverfestigende und carbidbildende Elemente enthält. Dazu gehört ein hoher Kohlenstoffgehalt, um die Ausscheidungshärtung durch Carbide auszunutzen.

Um solche Strukturelemente vor korrosivem Angriff zu schützen, ist es bekannt, Oberflächenschichten aus Materialien vorzusehen, die dichte Oxidschichten bilden, wie z.B. chrom- oder aluminiumhaltige Schichten oder Schichten auf Chrom-Nickel-Basis.

Diese Oberflächenschichten enthalten im allgemeinen möglichst geringe Anteile an Begleitelementen, wie Kohlenstoff, Mangan, Silicium, Titan usw., die die Bildung einer dichten Oxidschicht negativ beeinflussen.

Die Wärmebehandlungstemperatur und -zeit beim Herstellungsprozeß oder die Einsatztemperatur und -zeit können nun so sein, daß es innerhalb des mehrschichtigen Wandmaterials zu einer Angleichung der Zusammensetzungen der einzelnen Schichten kommt, so daß darunter deren jeweilige Funktion leidet. Insbesondere zeigt der für die Festigkeit der Kernschichten wichtige Kohlenstoff bei hohen Temperaturen eine hohe Beweglichkeit, so daß über längere Zeiten hinweg Festigkeitsverluste der tragenden Kernschicht durch Kohlenstoffabwanderung zu befürchten sind. Da der Kohlenstoff in die äußeren Schutzschichten hineindiffundiert, kann deren Schutzverhalten dadurch ebenfalls gestört werden. Dies ist insb. beachtlich bei Kernschichtmaterialien mit erhöhtem Kohlenstoffgehalt ($\geqq$ 0,1 %) und Ni-Cr-Deckschichten.

Hier Abhilfe zu schaffen ist Ziel der vorliegenden Erfindung.

Zu diesem Zweck sind für Hochtemperaturanwendungen geeignete Wandstrukturen der eingangs genannten Art im wesentlichen gekennzeichnet durch eine Kernschicht bestehend aus 20-40Ni, 10-40Cr, 0-10W, 0-7,5Mo, 2-5Nb, 0,2-0,7C, Rest Fe und allfällige Verunreinigungen; oder 30-40Ni, 20-30Cr, 2,5-7,5W, 0-5Mo, 2,5-4,0Nb, 0,3-0,5C, mit einem Nb-Gehalt von $\geqq$ 7,6 x C-Gehalt, der durch Ti, Zr, Ta, Hf oder V ganz oder teilweise ersetzt sein kann, Rest Fe und allfällige Verunreinigungen; und durch eine Oberflächenschicht aus Ni-Cr mit 20-55 % Cr, deren Kohlenstoffaktivität bei Herstellungs- und Betriebstemperatur mindestens gleich derjenigen der Carbidbildner der Kernschicht ist.

Es wurde nämlich gefunden, daß man die Umverteilung des Kohlenstoffs bei den genannten Strukturmaterialien mit erhöhtem C-Gehalt in eine Ni-Cr-Schutzschicht hinein verhindern kann, indem man die stark carbidbildenden Elemente im Werkstoff der Kernschicht einzeln oder in Kombination in stöchiometrischer Menge, bezogen auf den Kohlenstoffgehalt der Kernschicht, vorsieht. Ein geringer Überschuß an Carbidbildner stört dabei nicht, solange die Kernschicht dadurch in ihrer Festigkeit nicht beeinträchtigt wird.

Auf diese Weise wird der Gesamtkohlenstoff der Kernschicht weitgehend durch Bildung stabiler Carbide fixiert, die für die Festigkeit des Materials nicht abträglich sind, wodurch die Kohlenstoffaktivität bzw. der Gehalt der Kernschicht an beweglichem Kohlenstoff unter Werte gedrückt werden kann, die in der Oberflächenschicht vorhanden sind, so daß die sonst bei Hochtemperaturanwendung zu befürchtende Minderung der Eigenschaften durch Austausch insbesondere des Kohlenstoffs zwischen den einzelnen Schichten des Verbundwerkstoffs unterbleibt.

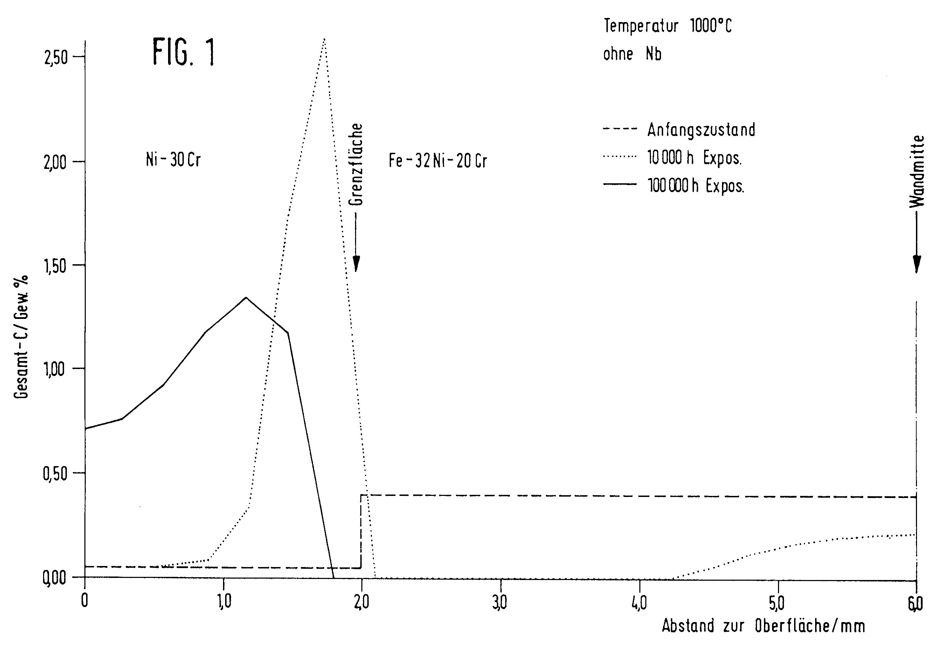

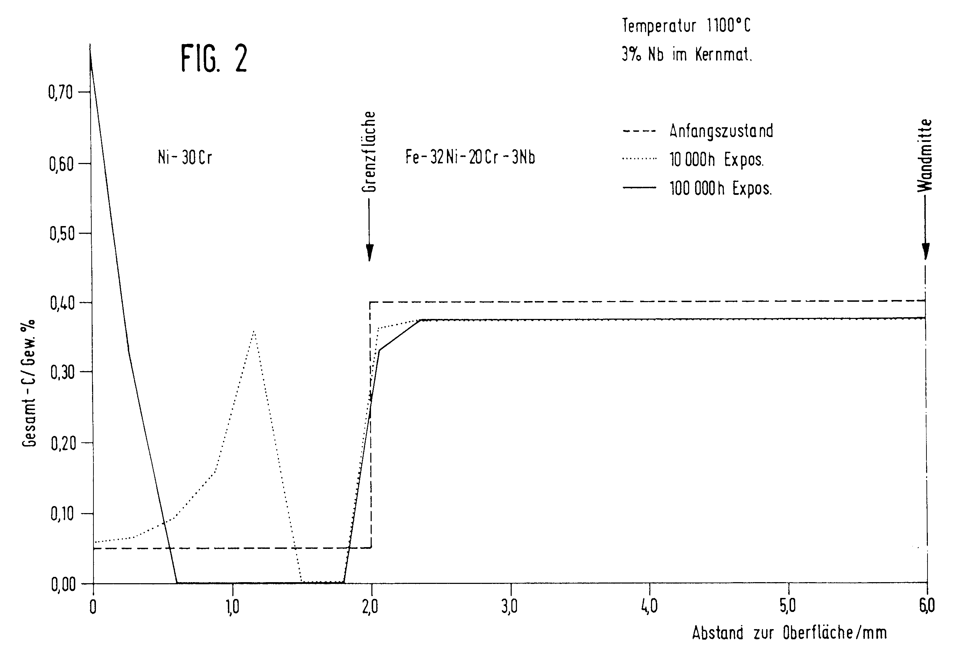

Die vorteilhafte Wirkung der vorliegenden Erfindung kann anhand eines Vergleichs der beigefügten Kurvenbilder Figur 1 und 2 verdeutlicht werden:

Figur 1 zeigt das Langzeitverhalten eines üblichen Wandelementes aus FeNiCr-Legierung mit NiCr-Oberflächenschicht: Wie man sieht, ist nach längerer Zeit der Kohlenstoff völlig aus dem Kernmaterial in die Oberflächenschicht gewandert.

Figur 2 zeigt die Verbesserung der Struktur durch Zusatz von 3 % Niob zum Material der Kernschicht: nach einer geringfügigen Verminderung in der Anfangsphase bleibt der Kohlenstoffgehalt der Kernschicht über lange Zeit statil.

Die anhand des besonderen Beispiels durch Figur 1 und 2 veranschaulichten Vorteile sind infolge der erfindungsgemäßen Zusammensetzungen erzielbar.

Aus den Kohlenstoffgehalten der verwendeten Hochtemperaturlegierungen, die im allgemeinen im Bereich von 0,2 bis 0,4 % liegen, läßt sich je nach Anwendung die vorzusehende Menge an stabilem Carbidbildner errechnen.

2

Beispiele sind Kernschichten bestehend aus 20-40Ni, 20-40Cr, 3Nb, 0,4C, Rest Fe und allfällige Verunreinigungen; und eine Oberflächenschicht aus Ni-Cr mit ≧ 30 % Cr, speziell die für die oben mitgeteilte Untersuchung verwendete Zusammensetzung von Fe-32Ni-20Cr-3Nb als Kernschicht mit einer Oberflächenschicht aus Ni-30Cr.

Spezielle Zusammensetzungen sind

Fe 35Ni25Cr5W3Nb0,4C und

Fe 35Ni25Cr5W3Mo3Nb0,4C.

Nb kann ggf. durch Ti, Zr, Ta, Hf oder V ganz oder z.T. ersetzt werden: dann gilt

$$\frac{[Nb] + [Zr]}{7,6} + \frac{[Ta] + [Hf]}{15} + \frac{[Ti]}{4} + \frac{[V]}{4,2} \geqslant [C] .$$

Beispiele für oxidbildende Oberflächenschichten, die insbesondere zusammen mit den vorgenannten Kernschichtwerkstoffen vorgesehen werden, sind

Ni-Cr

Bereiche: Ni (20 - 55)Cr

Ni ≧ 30 Cr

speziell Ni - 30 Cr

Die Schichtdicken der Oberflächenschichten sind frei wählbar. Im allgemeinen werden jedoch Schichten über 3 mm kaum vorgesehen werden. Besonders zweckmäßig erscheinen Oberflächenschichten von ca. 1 mm.

Es folgen weitere Beispiele für die Erfindung.

Beispiel 1

Durch Schleudergußverfahren oder formgebende Schweißung mittels Plasma-Auftragschweißen hergestellte Rohre aus Fe-35Ni-25Cr-3Nb-0,4C mit einem Durchmesser von 120 mm und einer Wandstärke von 8 mm wurden mit einer Schicht aus Ni-30Cr mittels Plasma-Auftragschweißen plattiert. Solche Rohre werden in Petrochemieanlagen z.B. Ethylene-Crackers und Methanreformierungsöfen eingesetzt. Die fast reine $Cr_2O_3$-Schicht, die an der Oberfläche bei Betriebstemperaturen von 700 - 1200°C entsteht, bildet einen hervorragenden Schutz gegen die korrosiven Angriffe der Betriebsatmosphären (z.B. Aufkohlung).

Beispiel 2

Kernwerkstoffe aus dem Zusammensetzungsbereich Fe-(20-40)Ni-(15-30)Cr-3Nb-0,4C wurden, wie in Beispiel 1 beschrieben, mit Ni-Cr als Oberflächenschicht der Zusammensetzung Ni-50Cr versehen. Diese Materialien sind für den Betrieb in Öfen mit Schwerölfeuerung (hoher V- und Na-Gehalt) geeignet.

**Patentansprüche**

1. Für Hochtemperaturanwendungen geeignete mehrschichtige Wandstruktur aus einer tragenden Kernschicht aus einer Legierung auf Eisen- Nickel-Chrom-Basis mit zumindest einseitiger korrosionsfester dünner Oberflächenschicht aus einer dichte Oxidfilme bildenden Legierung auf Nickel-Chrom-Basis, **gekennzeichnet durch** eine Kernschicht bestehend aus 20-40Ni, 10-40Cr, 0-10W, 0-7,5Mo, 2-5Nb, 0,2-0,7C, Rest Fe und allfällige Verunreinigungen; oder 30-40Ni, 20-30Cr, 2,5-7,5W, 0-5Mo, 2,5-4,0Nb, 0,3 - 0,5 C, mit einem Nb-Gehalt von ≧ 7,6 x C-Gehalt, der durch Ti, Zr, Ta, Hf oder V ganz oder teilweise ersetzt sein kann, Rest Fe und allfällige Verunreinigungen; und durch eine Oberflächenschicht aus Ni-Cr mit 20-55 % Cr, deren Kohlenstoffaktivität bei Herstellungs- und Betriebstemperatur mindestens gleich derjenigen der Carbidbildner der Kernschicht ist.

2. Wandstruktur nach Anspruch 1, **gekennzeichnet durch** eine Oberflächenschicht mit ≧ 30 % Cr.

**3.** Wandstruktur nach Anspruch 1 und 2,
**gekennzeichnet durch**
eine Kernschicht auf der Basis von Fe-32Ni-20Cr-3Nb und eine Oberflächenschicht aus Ni-30Cr.

**4.** Wandstruktur nach einem der vorangehenden Ansprüche,
**gekennzeichnet durch**
eine Schichtdicke der Oberflächenschicht von ca. 1 mm.

## Claims

**1.** Multi-layered wall structure which is suitable for high-temperature applications, comprising a supporting core layer of an iron- nickel-chromium-based alloy with an at least single-sidedly corrosion-resistant surface layer of a nickel-chromium-based alloy which forms dense oxide films, **characterised by** a core layer composed of 20-40 Ni, 10-40 Cr, 0-10 W, 0-7.5 Mo, 2-5 Nb, 0.2-0.7 C, residue Fe and occurring impurities; or of 30-40 Ni, 20-30 Cr, 2.5-7.5 W, 0-5 Mo, 2.5-4.0 Nb, 0.3-0.5 C, with a Nb content of $\geq$ 7.6 x C-content, which can be fully or partially replaced by Ti, Zr, Ta, Hf or V, residue Fe and occurring impurities, and of a surface layer of Ni-Cr with 20-55% Cr, the carbon activity of which at manufacturing and operating temperature is at least equal that of the carbide formers of the core layer.

**2.** Wall structure according to claim 1, **characterised by** a surface layer of $\geq$ 30% Cr.

**3.** Wall structure according to claim 1 and 2, **characterised by** a core layer on the basis of Fe-32Ni-20Cr-3Nb and a surface layer of Ni-30Cr.

**4.** Wall structure according to one of the above claims, **characterised by** a layer thickness of the surface layer of approximately 1 mm.

## Revendications

**1.** Structure de paroi à plusieurs couches convenant pour des utilisations à des températures élevées, formée d'une couche centrale constituée d'un alliage à base de fer-nickel-chrome avec une couche superficielle mince résistante à la corrosion sur au moins une face, constituée d'un alliage à base de nickel-chrome formant des films épais d'oxydes, caractérisée par une couche centrale formée de 20-40 Ni, 10-40 Cr, 0-10 W, 0-7,5 Mo, 2-5 Nb, 0,2-0,7 C, le reste étant du fer et des impuretés éventuelles ; ou 30-40 Ni, 20-30 Cr, 2,5-7,5 W, 0-5 Mo, 2,5-4,0 Nb, 0,3-0,5 C, avec une teneur en Nb $\geq$ 7,6 x teneur en C, qui peut être remplacé totalement ou partiellement par Ti, Zr, Ta, Hf ou V, le reste étant du fer et des impuretés éventuelles ; et par une couche superficielle formée de Ni-Cr, avec 20-55 % de Cr, dont l'activité du carbone à la température de fabrication et de fonctionnement est au moins égale à celle des agents de formation des carbures de la couche centrale.

**2.** Structure de paroi selon la revendication 1, caractérisée par une couche superficielle avec $\geq$ 30 % de Cr.

**3.** Structure de paroi selon les revendications 1 et 2, caractérisée par une couche centrale formée de Fe-32Ni-20Cr-3Nb et une couche superficielle formée de Ni-30Cr.

**4.** Structure de paroi selon l'une des revendications précédentes, caractérisée par une couche superficielle ayant une épaisseur d'environ 1 mm.

FIG. 1

Temperatur 1000°C
ohne Nb

---- Anfangszustand
····· 10 000 h Expos.
—— 100 000 h Expos.

Ni – 30 Cr

Fe – 32 Ni – 20 Cr

Grenzfläche

Wandmitte

Gesamt-C/Gew.%

Abstand zur Oberfläche/mm

EP 0 440 115 B1

FIG. 2

Temperatur 1100°C

3% Nb im Kernmat.

Ni-30Cr

Grenzfläche

Fe-32Ni-20Cr-3Nb

Wandmitte

---- Anfangszustand

........ 10 000h Expos.

———— 100 000h Expos.

Gesamt-C/Gew.%

0,70
0,60
0,50
0,40
0,30
0,20
0,10
0,00

0        1,0       2,0       3,0       4,0       5,0       6,0

Abstand zur Oberfläche/mm

EP 0 440 115 B1